# EUROPÄISCHE PATENTSCHRIFT

(11) **EP 2 384 610 B1**
(45) Veröffentlichungstag und Bekanntmachung des Hinweises auf die Patenterteilung: **18.06.2014**
(21) Anmeldenummer: 11162550.5
(22) Anmeldetag: 15.04.2011
(51) Int. Cl.: A01D 41/12

(54) **Erntegutrestehäcksel und -verteilanordnung für einen Mähdrescher**
Harvested goods remnant shredder and distribution assembly for a combine harvester
Agencement de hachage et de répartition de résidus de produits de récolte pour une moissonneuse-batteuse

(30) Priorität: 05.05.2010 DE 102010028599
(43) Veröffentlichungstag der Anmeldung: 09.11.2011
(73) Patentinhaber: DEERE & COMPANY, Moline, Illinois 61265-8098 (US)
(72) Erfinder: Lauer, Fritz, 66894, Krähenberg (DE); Weichholdt, Dirk, 57200, Woelfling les Sarreguemin (FR); Klein, Oliver, 66740, Saarlouis (DE)
(74) Vertreter: Holst, Sönke

(56) Entgegenhaltungen:
- EP-A1- 0 917 819
- DE-A1- 19 535 175
- FR-A- 1 183 637
- FR-A- 1 256 708

## Beschreibung

Die Erfindung betrifft eine Erntegutrestehäcksel- und -verteilanordnung mit einem Strohhäcksler, einem stromab des Strohhäckslers angeordneten Nachbeschleuniger und stromab des Nachbeschleunigers angeordneten Strohleitblechen zur seitlichen Ablenkung und Breitverteilung des Häckselguts über ein Feld, wobei der Nachbeschleuniger um eine parallel zur Drehachse des Strohhäckslers orientierte Drehachse in Drehung versetzbare Förderelemente umfasst.

### Stand der Technik

Mähdrescher dienen zur Ernte von Pflanzen, die von einem Feld abgeschnitten oder aufgenommen, gedroschen und von Korn getrennt werden. Während das Korn in einer Reinigungseinrichtung weiter gesäubert und in einem Korntank zwischengespeichert wird, werden die Erntegutreste entweder hinter dem Mähdrescher in einem Schwad auf dem Feld abgelegt oder gehäckselt und näherungsweise über die Arbeitsbreite der Erntegutaufnahmevorrichtung über das Feld verteilt. Für diese Aufgabe verwendet man üblicherweise Strohhäcksler mit einem rotierenden Rotor und daran pendelnd aufgehängten Messern, die die Erntegutreste im Zusammenwirken mit Gegenmessern zerkleinern und gegen Strohleitbleche werfen, welche die zerkleinerten Erntegutreste in seitlicher Richtung ablenken (vgl. DE 199 06 453A1).

Die als gattungsbildend angesehene DE 195 35 175 A1 beschreibt eine ähnliche Anordnung, bei der jedoch zwischen einem Strohhäcksler und einem Verteilerkasten mit den Strohleitblechen ein Trommelhäcksler angeordnet ist, um auch die längs liegenden Strohhalme zu zerkleinern. Der Trommelhäcksler rotiert um eine horizontal und quer zur Vorwärtsrichtung orientierte Drehachse, die parallel zur Drehachse des Strohhäckslers orientiert ist. Die Häckselmesser des Trommelhäckslers sind parallel zu seiner Drehachse und radial orientiert. Der Strohhäcksler umfasst verzahnte, sich radial und axial erstreckende Mitnehmerplatten und damit zusammenwirkende, feststehende Häckslermesser.

### Aufgabe

Die Anordnung nach DE 195 35 175 A1 dient dazu, die Erntegutreste auf ein Mindestmaß zu zerkleinern, unabhängig davon, ob sie längs oder quer orientiert einlaufen. Der Trommelhäcksler wirft die Erntegutreste danach genau nach hinten gegen die Strohleitbleche des Verteilerkastens, die sie zur Seite hin ablenken und über das Feld verteilen. Da die seitliche Ablenkung ausschließlich auf der Wirkung der Strohleitbleche beruht, ist die Verteilbreite dieser Anordnung recht begrenzt.

Das der Erfindung zu Grunde liegende Problem wird darin gesehen, eine Erntegutrestehäcksel- und -verteilanordnung für einen Mähdrescher mit einem Strohhäcksler, einem stromab des Strohhäckslers angeordneten Nachbeschleuniger und Strohleitblechen bereitzustellen, die sich durch eine vergrößerte Verteilbreite auszeichnet.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Erntegutrestehäcksel- und -verteilanordnung umfasst einen Strohhäcksler, einen stromab des Strohhäckslers angeordneten Nachbeschleuniger und stromab des Nachbeschleunigers angeordnete Strohleitbleche, welche das Häckselgut im Betrieb seitlich ablenken und breit über ein Feld verteilen. Der Nachbeschleuniger weist um eine parallel zur Drehachse des Strohhäckslers orientierte Drehachse in Drehung versetzbare Förderelemente auf, von denen zumindest einige vorlaufende Flächen umfassen, die mit der Drehachse des Nachbeschleunigers einen spitzen, nach außen gerichteten Winkel einschließen. Das bedeutet, dass eine in axialer Richtung des Nachbeschleunigers weiter außen angeordnete, vorlaufende Fläche des erwähnten Förderelements einer in axialer Richtung weiter innen (d. h. näher zur Mitte des Nachbeschleunigers) angeordneten, vorlaufenden Fläche desselben Förderelements nachläuft.

Dadurch erreicht man, dass bereits der Nachbeschleuniger dem von ihm abgegebenen Häckselgut eine nach außen gerichtete Geschwindigkeitskomponente verleiht. Auf diese Weise lässt sich die Verteilbreite der Erntegutrestehäcksel- und -verteilanordnung mit geringem Aufwand beträchtlich vergrößern. Der Nachbeschleuniger fördert außerdem Luft durch das Gehäuse des Strohhäckslers, was den Materialfluss verbessert. Durch den Strohhäcksler und den Nachbeschleuniger, die in einem einzigen Gehäuse integriert werden können, werden die Abläufe des Häckselns und Förderns räumlich getrennt und optimiert.

Bei einer bevorzugten Ausführungsform sind im mittleren Bereich des Nachbeschleunigers angeordnete Förderelemente parallel zur Drehachse des Nachbeschleunigers ausgerichtet. Hingegen schließen die vorlaufenden Flächen der Förderelemente in den äußeren Bereichen des Nachbeschleunigers jeweils mit der Drehachse des Nachbeschleunigers einen spitzen, nach außen gerichteten Winkel ein. Das im mittigen Bereich des Strohhäckslers ausgeworfene Erntegut wird demnach durch den Nachbeschleuniger genau nach hinten geworfen, während dem in den äußeren Bereichen in den Nachbeschleuniger einlaufenden Erntegut eine nach außen hin gerichtete Geschwindigkeitskomponente verliehen wird.

Bei einer anderen Ausführungsform sind hingegen im mittleren Bereich des Nachbeschleunigers keine Förderelemente angeordnet. Das Erntegut strömt somit im mittleren Bereich der Erntegutrestehäcksel- und Verteilanordnung direkt vom Strohhäcksler nach hinten zu den im mittigen Bereich angeordneten Strohleitblechen, ohne mit Förderelementen des Nachbeschleunigers zusammen zu wirken. Dadurch wird der Nachbeschleuniger vereinfacht und es erübrigt sich die Antriebsleistung für die im mittleren Bereich angeordneten Förderelemente.

Der Nachbeschleuniger umfasst vorzugsweise eine durchgehende Welle mit daran befestigten Stützscheiben, an denen in sich flache, leistenartige Förderelemente im Abstand von der Welle befestigt sind. Denkbar wäre auch einen Nachbeschleuniger mit einem geschlossenen Rotor zu verwenden, welcher einzeln spiralförmig aufgesetzte Elemente besitzt. Diese könnten dann im Außenbereich ebenfalls unter einem Winkel relativ zur Drehachse montiert sein, um dem Material eine Richtungsänderung hin zur Außenseite zu geben.

### Ausführungsbeispiel

In den Zeichnungen sind zwei nachfolgend näher beschriebene Ausführungsbeispiele der Erfindung dargestellt. Es zeigt:
- Fig. 1: eine schematische seitliche Ansicht eines Mähdreschers mit einer Erntegutrestehäcksel- und -verteilanordnung,
- Fig. 2: eine vergrößerte seitliche Ansicht der Erntegutrestehäcksel- und -verteilanordnung,
- Fig. 3: eine Draufsicht auf eine erste Ausführungsform der Erntegutrestehäcksel- und -verteilanordnung, und
- Fig. 4: eine Draufsicht auf eine zweite Ausführungsform der Erntegutrestehäcksel- und -verteilanordnung.

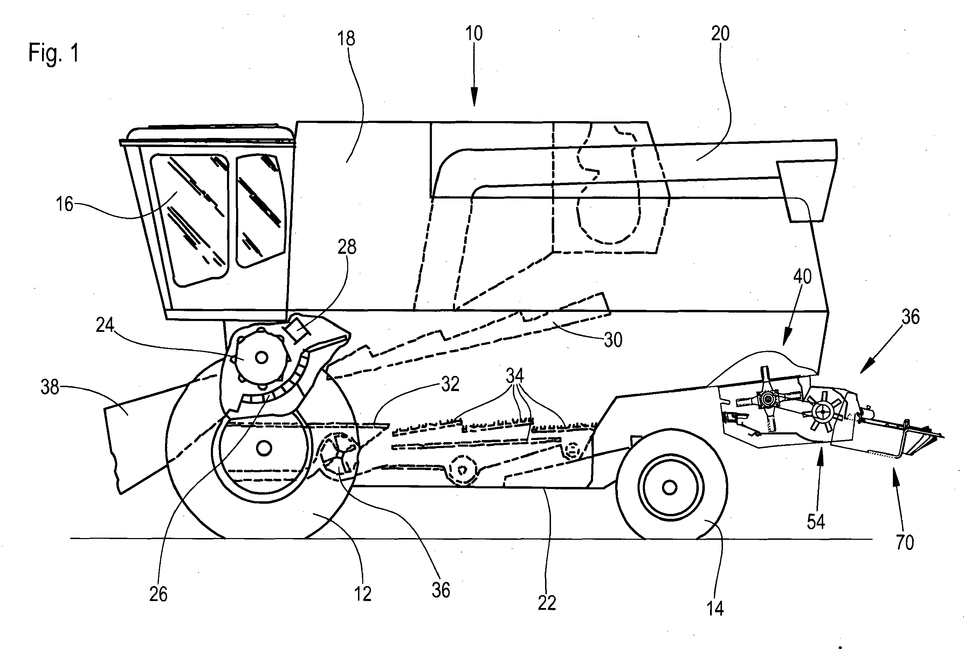

Eine in Figur 1 gezeigte Erntemaschine in der Form eines Mähdreschers 10 ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutreste über die Schüttler 30 in eine Erntegutrestehäcksel- und -verteilanordnung 36 gelangen und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde der Dreschtrommel 24 zugeführt, nachdem es von einer nicht gezeigten Erntegutbergungsvorrichtung vom Boden aufgenommen worden ist. Anstelle der Schüttler 30 können auch eine oder mehrere axiale Trennvorrichtungen (nicht gezeigt) treten, oder sie werden einschließlich der tangentialen Dreschtrommel 24 durch eine axiale Dresch- und Trenneinrichtung (nicht gezeigt) ersetzt. Im Folgenden beziehen sich Richtungsangaben, wie vorn, hinten und seitlich, auf die Vorwärtsrichtung des Mähdreschers 10, die in der Figur 1 von rechts nach links verläuft.

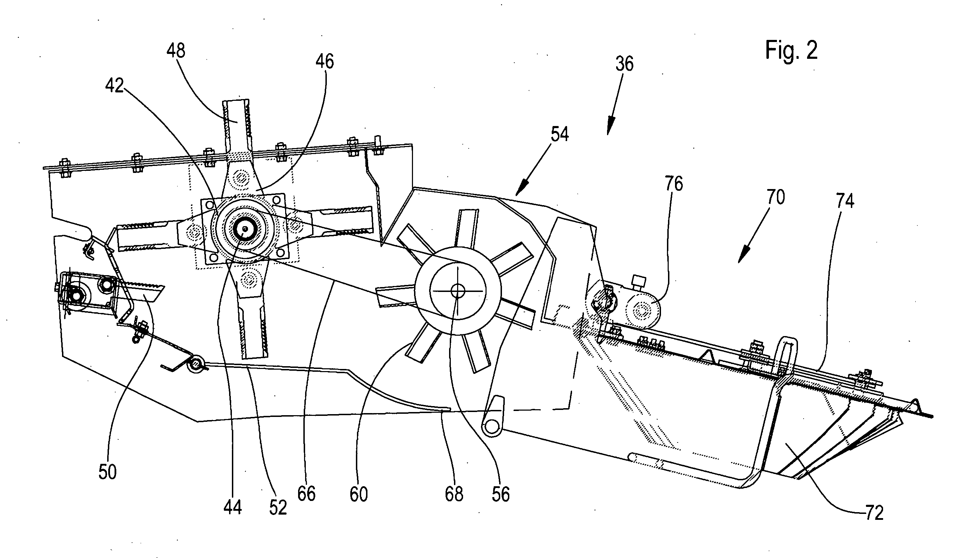

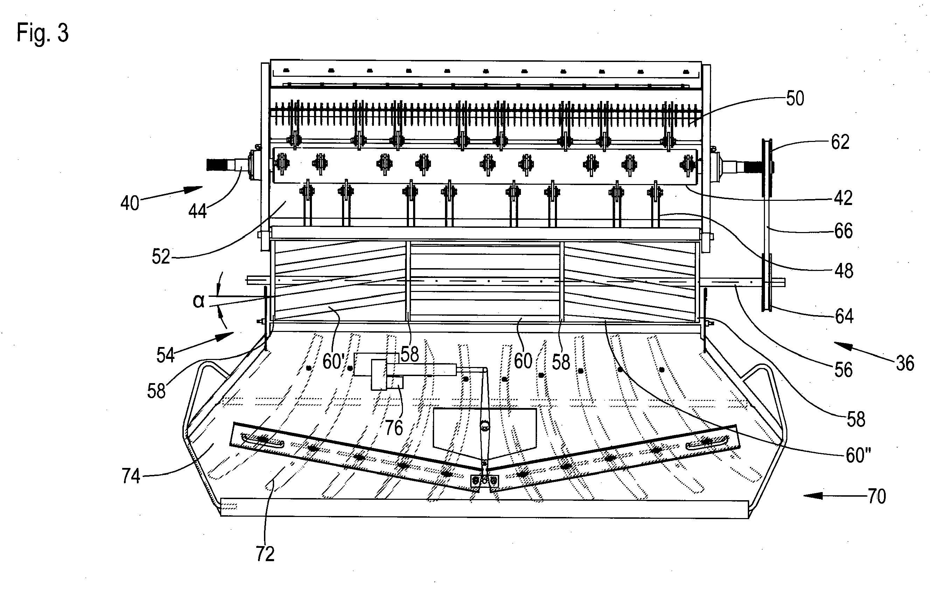

Die in der Figur 2 in einer vergrößerten seitlichen Ansicht und in der Figur 3 in einer Draufsicht dargestellte Erntegutrestehäcksel- und -verteilanordnung 36 umfasst einen Strohhäcksler 40, der sich aus einem um eine horizontal und quer zur Vorwärtsrichtung orientierte Welle 44 in Drehung versetzbaren Rotor 42 mit um seinen Umfang verteilten Konsolen 46, an denen Häckselmesser 48 paarweise pendelnd aufgehängt sind. Die Häckselmesser 48 wirken mit stationären Gegenmessern 50 zusammen. Der Strohhäcksler 40 ist innerhalb eines Gehäuses 52 angeordnet, das ein sich schräg nach hinten und unten erstreckendes Bodenblech umfasst.

Die Erntegutrestehäcksel- und -verteilanordnung 36 umfasst weiterhin einen Nachbeschleuniger 54, der eine in Drehung versetzbare Welle 56, vier daran befestigte, sich radial zur Welle 56 erstreckende Stützscheiben 58 und eine Vielzahl von in sich ebenen Förderelementen 60, 60', 60" umfasst, die sich jeweils zwischen zwei Stützscheiben 58 erstrecken. Die Welle 56 wird von der Welle 44 über Riemenscheiben 62, 64 und einen Riemen 66 angetrieben. Die Welle 44 wird ihrerseits vom Verbrennungsmotor des Mähdreschers 10 über einen weiteren Riementrieb (nicht gezeigt) angetrieben, der in der Figur 3 von links oder rechts an der Welle 44 angreift. Der mechanische Antrieb des Nachbeschleunigers 54 von einer Seite des Strohhäckslers 40 her stellt eine einfache und kostengünstige Lösung dar. Durch diesen Antrieb laufen der Rotor 42 des Strohhäckslers 40 und der Nachbeschleuniger 54 synchron. Dadurch wird bei einer verringerten Drehzahl des Strohhäckslers 40 in bestimmten Früchten auch die Drehzahl des Nachbeschleunigers 54 reduziert. Der einfache Antrieb kann auch durch einen variablen Antrieb mittels Keilriemenvariator ersetzt werden. Dadurch ist es möglich, jedes gewünschte Drehzahlverhältnis zwischen dem der Rotor 42 des Strohhäckslers 40 und dem Nachbeschleuniger 54 einzustellen und die Streubreite zu verändern.

Ein Gehäuse 68 des Nachbeschleunigers 54 umfasst eine Bodenwanne, die den Nachbeschleuniger 54 von unten her um einen Winkelbereich konzentrisch umschließt. Durch die offene Bauweise und die entsprechende Ausformung des Gehäuses 68 rund um den Nachbeschleuniger 54 wirkt dieser zusätzlich als Querstromgebläse innerhalb des Gehäuses 52 und unterstützt somit den Austrag des Materials aus dem Strohhäcksler 40.

Anhand der Figur 3 ist erkennbar, dass der Nachbeschleuniger 54 drei Gruppen von Förderelementen 60 aufweist. Eine erste Gruppe der Förderelemente 60 befindet sich in der Mitte des Nachbeschleunigers 54 und setzt sich aus in sich flachen Förderelementen 60 zusammen, die sich in radialer und axialer Richtung zur Welle 56 erstrecken.

Eine zweite Gruppe der Förderelemente 60' befindet sich an der in Vorwärtsrichtung linken Seite des Nachbeschleunigers 54 und setzt sich aus in sich flachen Förderelementen 60 zusammen, die sich in radialer zur Welle 56 erstrecken, in axialer Richtung aber gegenüber der Welle um einen spitzen Winkel α abgewinkelt sind, sodass die in axialer Richtung inneren Enden der Förderelemente 60' den in axialer Richtung äußeren Enden der Förderelemente 60' in Drehrichtung nachlaufen. Dadurch wird das Häckselgut nicht genau nach hinten, sondern gegenüber der Längsmittelachse des Mähdreschers 10 um den Winkel α nach außen (links) gerichtet abgegeben.
Eine dritte Gruppe der Förderelemente 60' befindet sich an der in Vorwärtsrichtung rechten Seite des Nachbeschleunigers 54 und setzt sich aus in sich flachen Förderelementen 60 zusammen, die sich in radialer zur Welle 56 erstrecken, in axialer Richtung aber gegenüber der Welle um einen spitzen Winkel α abgewinkelt sind, sodass die in axialer Richtung inneren Enden der Förderelemente 60' den in axialer Richtung äußeren Enden der Förderelemente 60' in Drehrichtung nachlaufen. Dadurch wird das Häckselgut nicht genau nach hinten, sondern gegenüber der Längsmittelachse des Mähdreschers 10 um den Winkel α nach außen (rechts) gerichtet abgegeben.

Da die Erntegutrestehäcksel- und -verteilanordnung 36 in der Figur 3 in einer Draufsicht gezeigt ist und der Nachbeschleuniger 54 unterschlächtig fördert, wie der Strohhäcksler 40, sieht man dort jeweils die oberen, rücklaufenden Förderelemente 60, 60', 60" anstelle der gerade aktiven Förderelemente 60, 60', 60".

Rückwärtig des Nachbeschleunigers 54 ist ein Strohverteiler 70 mit unterhalb eines Deckels 74 angeordneten Strohleitblechen 72 angeordnet. Die Strohleitbleche 72 sind symmetrisch zur Längsmittelebene jeweils nach außen gekrümmt. Sie können durch einen Verstellmotor 76 in seitlicher Richtung verstellt werden, indem ihre rückwärtigen Enden seitlich verschoben werden und ihre vorderen Enden um vertikale Achsen rotieren, um die Abwurfrichtung an Wind-und/oder Seitenhangverhältnisse anpassen zu können.

Nach alledem ist die Funktionsweise der Erntegutrestehäcksel- und -verteilanordnung 36 folgendermaßen. Der Strohhäcksler 40 erhält die Erntegutreste vom Schüttler 30 oder einer anderen Trenneinrichtung, häckselt es im Zusammenwirken mit den Gegenmessern 50 und gibt es in tangentialer Richtung nach hinten ab, d. h. schräg nach hinten und unten. Dort wird es von den Förderelementen 60, 60', 60" des Nachbeschleunigers 54 angenommen, um etwa 45° mitgeführt und nach hinten ausgeworfen. Die in unterschiedlichen Winkeln gegenüber der Achsrichtung der Welle 56 angeordneten Förderelemente 60, 60', 60" werfen das Häckselgut in unterschiedlichen Winkeln gegenüber der Vorwärtsrichtung ab. Die mittleren Förderelemente 60 werfen es genau nach hinten ab, während die äußeren Förderelemente 60' und 60" es schräg nach außen werfen. Die Strohleitbleche 72 müssen demnach einen geringeren Beitrag zu seitlichen Ablenkung des Ernteguts leisten, was die Wurfweite der Erntegutrestehäcksel-und -verteilanordnung 36 ohne großen Aufwand vergrößert.

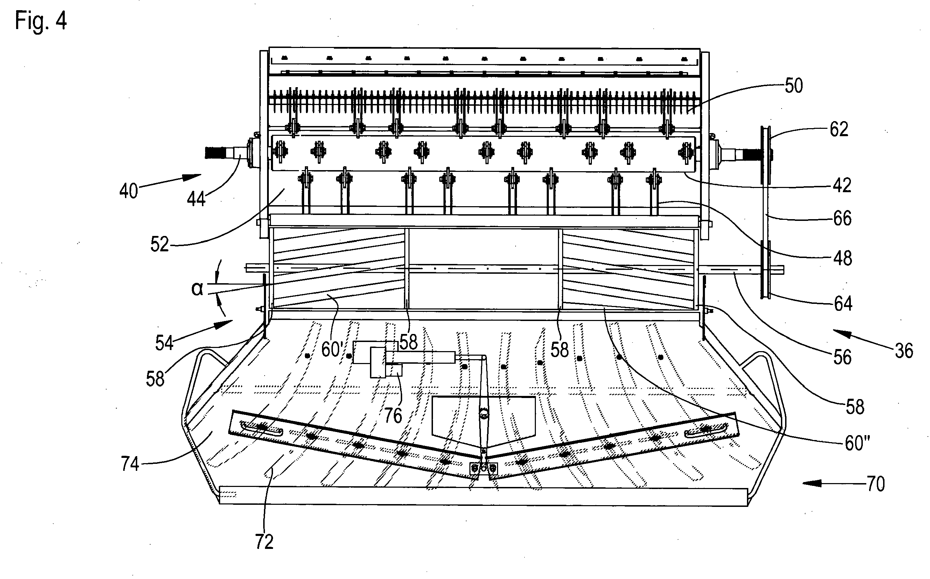

In der Figur 4 ist eine Draufsicht auf eine zweite Ausführungsform einer Erntegutrestehäcksel-und -verteilanordnung 36 dargestellt, in der mit der ersten Ausführungsform nach den Figuren 1 bis 3 übereinstimmende Elemente mit denselben Bezugszeichen versehen sind. Der Unterschied zur ersten Ausführungsform besteht darin, dass im mittleren Bereich des Nachbeschleunigers 54 keine Förderelemente 60 angeordnet sind. Das im mittleren Bereich vom Strohhäcksler 40 abgegebene Erntegut strömt somit ohne zusätzliche Förderung zu den im mittleren Bereich der Erntegutrestehäcksel- und -verteilanordnung 36 angeordneten Strohleitblechen 72. Hierdurch wird zum Einen die Erntegutrestehäcksel- und - verteilanordnung 36 vereinfacht, zum Anderen spart man Antriebsleistung für die mittleren Förderelemente 60 ein.

## Patentansprüche

1. Erntegutrestehäcksel- und -verteilanordnung (36) mit einem Strohhäcksler (40), einem stromab des Strohhäckslers (40) angeordneten Nachbeschleuniger (54) und stromab des Nachbeschleunigers (54) angeordneten Strohleitblechen (72) zur seitlichen Ablenkung und Breitverteilung des Häckselguts über ein Feld, wobei der Nachbeschleuniger (54) um eine parallel zur Drehachse des Strohhäckslers (40) orientierte Drehachse in Drehung versetzbare Förderelemente (60, 60', 60") umfasst, **dadurch gekennzeichnet, dass** zumindest ein Teil der vorlaufenden Flächen der Förderelemente (60', 60") des Nachbeschleunigers (54) mit der Drehachse des Nachbeschleunigers (54) einen spitzen, nach außen gerichteten Winkel (α) einschließt, um dem vom Nachbeschleuniger (54) abgegebenen Häckselgut eine nach außen gerichtete Geschwindigkeitskomponente zu verleihen.

2. Erntegutrestehäcksel- und -verteilanordnung (36) nach Anspruch 1, **dadurch gekennzeichnet, dass** im mittleren Bereich des Nachbeschleunigers (54) angeordnete Förderelemente (60) parallel zur Drehachse des Nachbeschleunigers (54) angeordnet sind, während nur die vorlaufenden Flächen äußerer Förderelemente (60', 60") des Nachbeschleunigers (54) jeweils mit der Drehachse des Nachbeschleunigers (54) einen spitzen, nach außen gerichteten Winkel (α) einschließen.

3. Erntegutrestehäcksel- und -verteilanordnung (36) nach Anspruch 1, **dadurch gekennzeichnet, dass** im mittleren Bereich des Nachbeschleunigers (54) keine Förderelemente (60) angeordnet sind, während die vorlaufenden Flächen äußerer Förderelemente (60', 60") des Nachbeschleunigers (54) jeweils mit der Drehachse des Nachbeschleunigers (54) einen spitzen, nach außen gerichteten Winkel (α) einschließen.

4. Erntegutrestehäcksel- und -verteilanordnung nach einem der Ansprüche 1 bis 3, **dadurch gekennzeichnet, dass** der Nachbeschleuniger (54) eine durchgehende Welle (56) mit daran befestigten Stützscheiben (58) umfasst, an denen die Förderelemente (60, 60', 60") im Abstand von der Welle (56) befestigt sind.

5. Erntegutrestehäcksel- und -verteilanordnung (36) nach einem der vorhergehenden Ansprüche, **dadurch gekennzeichnet, dass** dem Nachbeschleuniger (54) ein konzentrisches Gehäuse (68) zugeordnet ist.

6. Mähdrescher (10) mit einer Erntegutrestehäcksel- und -verteilanordnung (36) nach einem der vorhergehenden Ansprüche.

## Claims

1. Harvested goods remnant shredder and distribution assembly (36) with a straw shredder (40), a post-accelerator (54) arranged downstream of the straw shredder (40) and straw guide sheets (72) which are arranged downstream of the post-accelerator (54) and are intended for the lateral deflection and broad distribution of the chopped straw product over a field, wherein the post-accelerator (54) comprises conveying elements (60, 60', 60") which can be set into rotation about an axis of rotation oriented parallel to the axis of rotation of the straw shredder (40), **characterized in that** at least a portion of the advancing surfaces of the conveying elements (60', 60") of the post-accelerator (54) encloses an acute, outwardly directed angle (α) with the axis of rotation of the post-accelerator (54) in order to impart an outwardly directed speed component to the chopped straw product output by the post-accelerator (54).

2. Harvested goods remnant shredder and distribution assembly (36) according to Claim 1, **characterized in that** conveying elements (60) arranged in the central region of the post-accelerator (54) are arranged parallel to the axis of rotation of the post-accelerator (54), while only the advancing surfaces of outer conveying elements (60', 60") of the post-accelerator (54) in each case enclose an acute, outwardly directed angle (α) with the axis of rotation of the post-accelerator (54).

3. Harvested goods remnant shredder and distribution assembly (36) according to Claim 1, **characterized in that** no conveying elements (60) are arranged in the central region of the post-accelerator (54), while the advancing surfaces of outer conveying elements (60', 60") of the post-accelerator (54) in each case enclose an acute, outwardly directed angle (α) with the axis of rotation of the post-accelerator (54).

4. Harvested goods remnant shredder and distribution assembly according to one of Claims 1 to 3, **characterized in that** the post-accelerator (54) comprises a continuous shaft (56) with supporting discs (58) which are fastened thereto and to which the conveying elements (60, 60', 60") are fastened at a distance from the shaft (56).

5. Harvested goods remnant shredder and distribution assembly (36) according to one of the preceding claims, **characterized in that** the post-accelerator (54) is assigned a concentric housing (68) .

6. Combine harvester (10) with a harvested goods remnant shredder and distribution assembly (36) according to one of the preceding claims.

## Revendications

1. Agencement de hachage et de répartition de résidus de produits de récolte (36) comprenant un hache-paille (40), un post-accélérateur (54) disposé en aval du hache-paille (40) et des tôles de guidage de paille (72) disposées en aval du post-accélérateur (54) pour dévier latéralement et répartir en largeur le produit haché sur un champ, le post-accélérateur (54) comprenant des éléments de transport (60, 60', 60") pouvant être mis en rotation autour d'un axe de rotation orienté parallèlement à l'axe de rotation du hache-paille (40), **caractérisé en ce qu'**au moins une partie des surfaces avant des éléments de transport (60', 60") du post-accélérateur (54) forme avec l'axe de rotation du post-accélérateur (54) un angle aigu (α) orienté vers l'extérieur, afin de conférer au produit haché délivré par le post-accélérateur (54) une composante de vitesse orientée vers l'extérieur.

2. Agencement de hachage et de répartition de résidus de produits de récolte (36) selon la revendication 1, **caractérisé en ce que** des éléments de transport (60) disposés dans la région centrale du post-accélérateur (54) sont disposés parallèlement à l'axe de rotation du post-accélérateur (54), tandis que seulement les surfaces avant d'éléments de transport extérieurs (60', 60") du post-accélérateur (54) forment à chaque fois avec l'axe de rotation du post-accélérateur (54) un angle (α) aigu, orienté vers l'extérieur.

3. Agencement de hachage et de répartition de résidus de produits de récolte (36) selon la revendication 1, **caractérisé en ce qu'**aucun élément de transport (60) n'est disposé dans la région centrale du post-accélérateur (54), tandis que les surfaces avant d'éléments de transport extérieurs (60', 60") du post-accélérateur (54) forment à chaque fois avec l'axe de rotation du post-accélérateur (54) un angle (α) aigu, orienté vers l'extérieur.

4. Agencement de hachage et de répartition de résidus de produits de récolte selon l'une quelconque des revendications 1 à 3, **caractérisé en ce que** le post-accélérateur (54) comprend un arbre continu (56) avec des disques de support (58) fixés sur celui-ci, sur lesquels sont fixés les éléments de transport (60, 60', 60") à distance de l'arbre (56).

5. Agencement de hachage et de répartition de résidus de produits de récolte (36) selon l'une quelconque des revendications précédentes, **caractérisé en ce qu'**un boîtier (68) concentrique est associé au post-accélérateur (54).

6. Moissonneuse-batteuse (10) comprenant un agencement de hachage et de répartition de résidus de produits de récolte (36) selon l'une quelconque des revendications précédentes.
